# EUROPEAN PATENT SPECIFICATION

(11) **EP 3 569 881 B1**
(45) Date of publication and mention of the grant of the patent: **24.02.2021**
(21) Application number: 18173322.1
(22) Date of filing: 18.05.2018
(51) Int. Cl.: F16C 19/16, F16C 19/18, F16C 33/66, F16C 37/00

(54) **OIL-LUBRICATED BEARING ASSEMBLY**
ÖLGESCHMIERTE LAGERANORDNUNG
ENSEMBLE DE PALIER LUBRIFIÉ À L'HUILE

(43) Date of publication of application: 20.11.2019
(73) Proprietor: SNR Wälzlager GmbH, 40699 Erkrath (DE)
(72) Inventor: HERMANN, Waldemar, 33100 Paderborn (DE); WENZEL, Henning, 33615 Bielefeld (DE)
(74) Representative: Alatis

(56) References cited:
- GB-A- 773 279
- US-A- 1 745 216

## Description

### TECHNICAL FIELD OF THE INVENTION

The invention relates to an oil-lubricated bearing assembly with one or more bearings received in a bearing housing provided with an oil collecting sump such that in an operational position of the bearing assembly, the bearing is partially immersed in an oil bath retained in the oil collecting chamber and pick-up lubrication is achieved when the bearing rotates. It relates more specifically to the level control of the oil bath.

### BACKGROUND ART

An immersion-lubricated bearing arrangement with a roller bearing partially immersed in an oil bath is disclosed in prior art document US3298760A. The oil supply in the bearing housing is such that at rest, the lowermost rolling member of the bearing is immersed into the oil up to about one-half of its cross-section. The lowermost parts of the bearing cage and of the adjacent inner race of the stationary outer ring of the bearing are also immersed. The bearing housing is provided with a drain hole at the lowermost portion of the inner race of the stationary outer bearing ring. An hydrodynamic pressure builds up in the gap existing between the bearing cage and the adjacent surface of the inner race of the outer bearing when the bearing rotates and this hydrodynamic pressure is used to discharge the oil from the bearing housing and through an external cooling circuit back to the bearing housing via a supply hole.

In case of malfunction of the cooling circuit, e.g. a leak, no provisions are taken to ensure that an appropriate minimal oil level is maintained in the bearing housing, which can rapidly lead to fatal consequences for the bearing itself.

Moreover, the flow rate achieved by this arrangement may prove insufficient to cool a bearing that is subject to high revolution speeds or high loads.

In order to increase the flow rate of a lubricating and cooling oil of high viscosity through a bearing housing of a bearing assembly, it has been suggested in prior art document US5221147 to provide a lubricant feed line in an upper area on one axial side of the bearing housing and a bent outlet channel opening at a lower point of the bearing housing on the opposite axial side of the bearing housing. The outlet channel is bent so that the oil can drain by gravity through its opening and change direction to exit in a horizontal direction parallel to the horizontal revolution axis of the bearing.

The cross-section of the outlet opening is significantly greater than the cross-section of the inlet opening to ensure that the oil level in the bearing housing can be maintained below a predetermined maximum level. However, because the outlet opening is located at the lowermost part of the bearing housing and oil can drain by gravity, there is a significant danger that the oil level cannot be maintained above a desirable minimum level in case of a malfunction of the oil supply line.

Moreover, the arrangement requires space, notably in the vertical direction, below the bottom of the cavity of the bearing housing.

An oil-lubricated bearing assembly with the features of the preamble of claim 1 is known from GB 773 279 A.

### SUMMARY OF THE INVENTION

The invention aims to provide a simple arrangement for reliably maintaining an oil level in a bearing housing within a desirable range.

According to a first aspect of the invention, there is provided an oil-lubricated bearing assembly comprising a bearing housing and at least one rotary bearing received in a cavity of the bearing housing. The rotary bearing has at least one stationary outer race facing a revolution axis of the bearing assembly. In an operational position of the bearing housing the revolution axis is horizontal. The bearing housing comprises an oil outlet for letting oil out of the bearing housing. The oil outlet comprises a channel through a wall of the bearing housing and a mouth section having an edge that surrounds an opening located in the bearing housing for communication between the cavity of the bearing housing and the channel. In the operational position, there is a horizontal reference plane that intersects the edge at at least one intersection point and is such that every point of the edge is in or above the horizontal reference plane. The horizontal plane is at a distance above a lowermost part of the channel and at a distance above a lowermost part of the outer race. The opening has an orthogonal projection on the horizontal reference plane with a projected area, which is strictly greater than an inner cross-sectional area of a lower part of a cross-section of the channel that is below the horizontal reference plane.

The horizontal reference plane defines a minimum oil level in the cavity of the bearing housing. This level is both above the lowermost part of the outer race, which ensures an appropriate minimum lubrication of the bearing by immersion of the lowermost part of the outer race, and above the lowermost part of the channel, which ensures that excess oil above the reference level can be rapidly drained, by gravity if needs be or otherwise.

Preferably, the reference plane is closer to the revolution axis than the outer race. In other words, the minimum distance between the outer race and the revolution axis is greater than the distance between the reference plane (or the surface of the oil bath in the cavity of the bearing housing) and the revolution axis. The whole width of the outer race is immersed in the oil bath.

According to a preferred embodiment, the rotary bearing has at least one outer ring on which the at least one stationary outer race facing a revolution axis of the bearing assembly is formed. Preferably, the reference plane is closer to the revolution axis than the outer ring. There may be more than one outer ring.

According to a preferred embodiment, the projected area of the orthogonal projection of the opening on the horizontal reference plane is greater than or equal to an inner cross-sectional area of the cross-section of the channel.

According to an embodiment, the rotary bearing has at least one inner ring with at least one inner race facing away from the revolution axis and a cylindrical shaft seat facing the revolution axis, and the edge of the mouth section has an uppermost part, which is at a lower vertical position than the cylindrical shaft seat, preferably at a higher vertical position than a lowermost part of the inner race.

According to a preferred embodiment, the channel extends along a horizontal axis preferably perpendicular to a vertical plane containing the revolution axis. The channel is preferably located in a vertical side wall of the bearing housing. Alternative locations, e.g. in a vertical end wall of the bearing housing, i.e. a wall perpendicular to the revolution axis, are also possible.

According to one embodiment, the channel is entirely below the reference plane. This arrangement is advantageous in that it allows an efficient draining of the excess oil by gravity.

However, a more compact arrangement is achieved when the channel has a cross-section, which extends on both sides of the horizontal reference plane.

According to an embodiment, the oil outlet comprises a tube with a cut-out portion and an end wall, which forms the edge of the mouth section.

According to another embodiment, the oil outlet is a tube with a bent end forming the mouth section.

Preferably, the cavity of the bearing housing comprises an oil sump, which, when the bearing assembly is in the operational position, is located below the revolution axis and the opening of the mouth section of the outlet is located in the oil sump. The oil sump contains the oil bath for the lubrication and cooling of the bearing.

According to an embodiment the oil-lubricated bearing assembly further comprises an oil inlet for letting oil into the bearing housing. Advantageously, the area of the cross-section of the outlet is greater than an area of the cross-section of the inlet, which contributes to ensure that the outlet flow rate can exceed the inlet flow rate if needs be.

Preferably, the oil-lubricated bearing assembly further comprises an oil-cooling circuit comprising at least one pump and oil pipes for connecting the oil outlet to the oil inlet through the pump. The oil-cooling circuit is preferably outside the bearing housing. A single oil cooling circuit can be used for several bearing housings. The oil-cooling circuit may include a reservoir. It may include a suction pump for draining the bearing housing and a supply pump for injecting cooled oil into the housing. Advantageously, the oil-cooling circuit further comprises a heat exchanger for extracting heat from oil circulating in the oil-cooling circuit.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is cross section of a bearing assembly according to one embodiment of the invention;
- figure 2 is a longitudinal section of the bearing assembly of figure 1;
- figure 3 is an isometric view, partly in section of the bearing assembly of figure 1;
- figure 4 is a longitudinal section of a bearing assembly according to another embodiment of the invention;
- figure 5 is an isometric view, partly in section of the bearing assembly of figure 4.

### DETAILED DESCRIPTION OF PREFERRED EMBODIMENTS

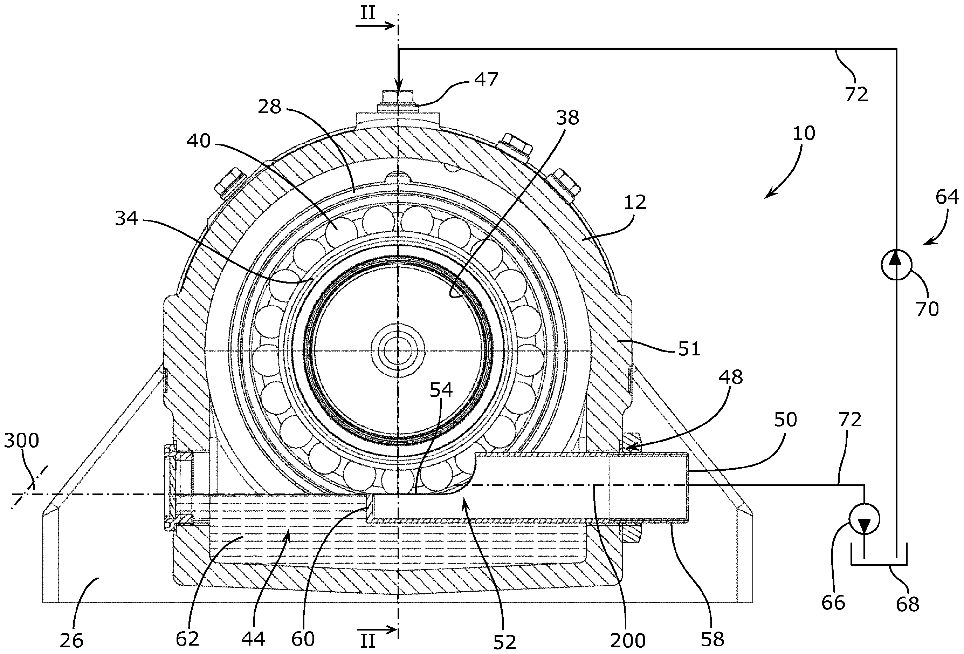

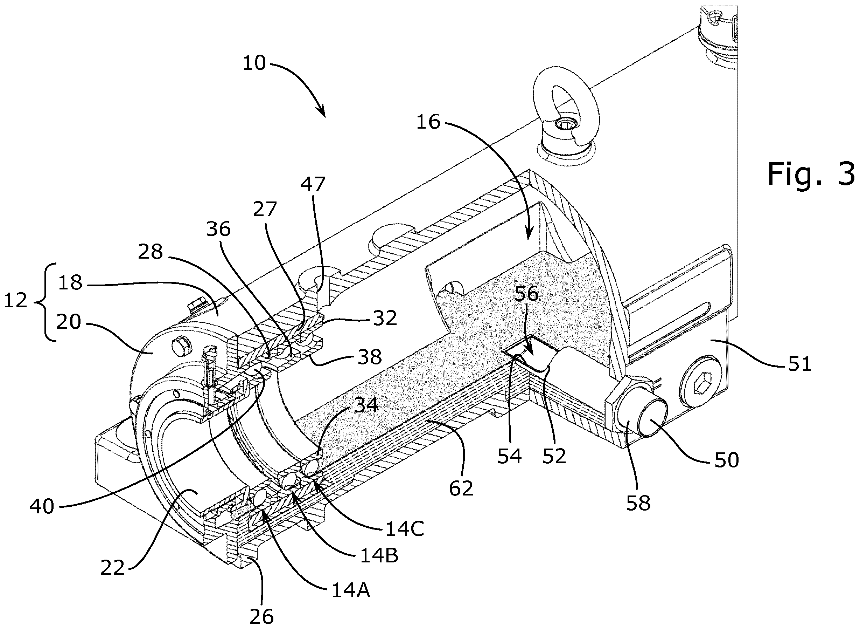

With reference to figures **1** to **3****,** an oil-lubricated rotary bearing assembly **10** comprises a stationary bearing housing **12** and a set of three rotary bearings **14A**, **14B, 14C** received in a cavity **16** of the bearing housing **12.** The stationary bearing housing **12** comprises a main housing body **18** closed by a cover **20** provided with an opening **22** for accommodating a rotary shaft (not shown), as well as a labyrinth seal **24** filled with grease for isolating the cavity **16** from the outside around the rotary shaft. The bearing housing **12** is further provided with one or more pedestals **26** for fixing the bearing assembly **10** to a base. The bearing housing **12** can be made of steel or cast iron, but is preferably made of a light metal, e.g. aluminium, and is provided with an inner reinforcing sleeve **27** which forms a concave cylindrical seat.

Each rotary bearing **14A, 14B, 14C** comprises at least one outer ring **28** press-fitted or otherwise fixed into the reinforcing sleeve **27** of the bearing housing **12** and provided with at least one stationary outer race **30** which faces a revolution axis **100** of the bearing assembly **10.** In an operational position of the bearing housing **12,** the revolution axis **100,** which is coaxial with the axis of the reinforcing sleeve **27** and perpendicular to an end face **32** of the outer ring **28** (i.e. perpendicular to the plane of figure **1**), is also horizontal.

Each rotary bearing **14A, 14B, 14C** further comprises at least one inner ring **34** provided with at least one inner race **36** facing away from the revolution axis **100** and a tapered or cylindrical shaft seat **38** facing the revolution axis **100.** A set of rolling bodies **40** are disposed between the inner race(s) **36** and the outer race(s) **30** and retained by a bearing cage (not shown).

The cavity **16** of the bearing housing **12** includes an oil sump **44,** which, in the operational position, is located below the revolution axis **100.** A through bore **45** runs parallel to the revolution axis **100** below the rotary bearings **14A, 14B, 14C** and the reinforcing sleeve, to connect the lower part of the sump **44** to a lower chamber **46** of the cavity **16,** between the cover and e the rotary bearings **14A, 14B, 14C.**

The bearing housing **12** is provided with an oil inlet **47** for letting oil into the cavity **16** and an oil outlet **48** for letting oil out of the cavity **16** and of the bearing housing **12.**

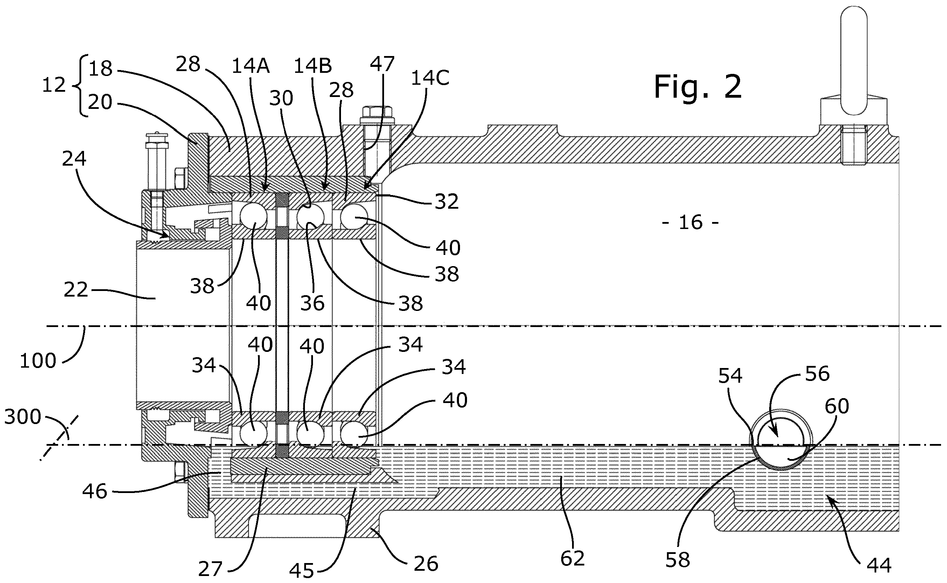

As best illustrated in figure **2****,** the oil outlet **48** is located at a distance of the rotary bearings **14A, 14B, 14C** in the axial direction.

The oil outlet **48** comprises a channel **50** through a side wall **51** of the bearing housing and a mouth section **52** having an edge **54** that surrounds an opening **56** located in the cavity **16** for communication between the cavity **16** of the bearing housing **12** and the channel **50.** In this embodiment, the oil outlet **48** consists of a tube **58** with an end wall **60** and a partial cutout to form the opening **56.** The tube extends in a horizontal direction **200,** which is perpendicular to a vertical plane containing the revolution axis **100.**

In the operational position, it is possible to define a horizontal reference plane **300,** which intersects the edge **54** of the opening **56** and such that each point of the edge of the opening is in or above the horizontal reference plane **300.** Remarkably, the reference plane **300,** which corresponds to the minimal level of an oil bath **62** in the cavity **16** of the bearing housing **12** and singularly in the sump **44,** is at a distance above the through bore **45** and above a lowermost part of the outer races **30** of the rotary bearings **14A** and **14C**, closer to the revolution axis **100** than the outer races **30.** As a result, the outer races **30** of the rotary bearings **14A** and **14C** are immersed into the oil bath **62.**

The edge **54** of the opening **56** has an uppermost part, which is at a lower vertical position than the cylindrical shaft seat **38,** preferably at a higher vertical position than a lowermost part of the inner race **36.** Accordingly, the full section of the opening **54** is available before the level of the oil in the cavity **16** of the bearing housing **12** reaches the cylindrical shaft seat **38.**

Preferably, the uppermost part of the edge **54** of the opening **56** is also at a lower vertical position than the seal **24,** which avoids an oil leakage through the seal **24.**

The channel **50** formed by the inner wall of the tube **58** defines a vertical cross-section through the side wall **51** of the bearing housing **12.** This cross-section extends on both sides of the horizontal reference plane **300.** In particular, the lowermost part of the cross section is below the horizontal reference plane while the uppermost part of the cross section is above the horizontal reference plane.

Remarkably, the opening **56** has an orthogonal projection on the horizontal reference plane **300** with a projected area, which is greater than or equal to an inner cross-sectional area of a lower part of the cross-section of the channel **50** that is below the horizontal reference plane **300,** and is preferably greater than or equal to an inner cross-sectional area of the cross-section of the channel **50.**

The oil-lubricated bearing assembly **10** further comprises an external oil-cooling circuit **64,** which may comprise a suction pump **66** between the oil outlet **48** and a reservoir **68** an/or heat exchanger, a supply pump **70** for supplying cool oil to the bearing through the inlet **47,** and pipes **72** connecting the components of the cooling circuit **64.**

In operation, the rolling bodies **40** of the rotary bearings **14A** and **14C** run through the oil bath **62** at the lower end of the outer races **30.** The splashing about of oil generated by the motion of the rolling bodies **40** and of the cages of the rotary bearings **14A** and **14C** is sufficient to also lubricate the intermediate rotary bearing **14B.**

The suction pump **66** may be dispensed with if the required flow rate can be achieved by gravity with the available outlet cross section.

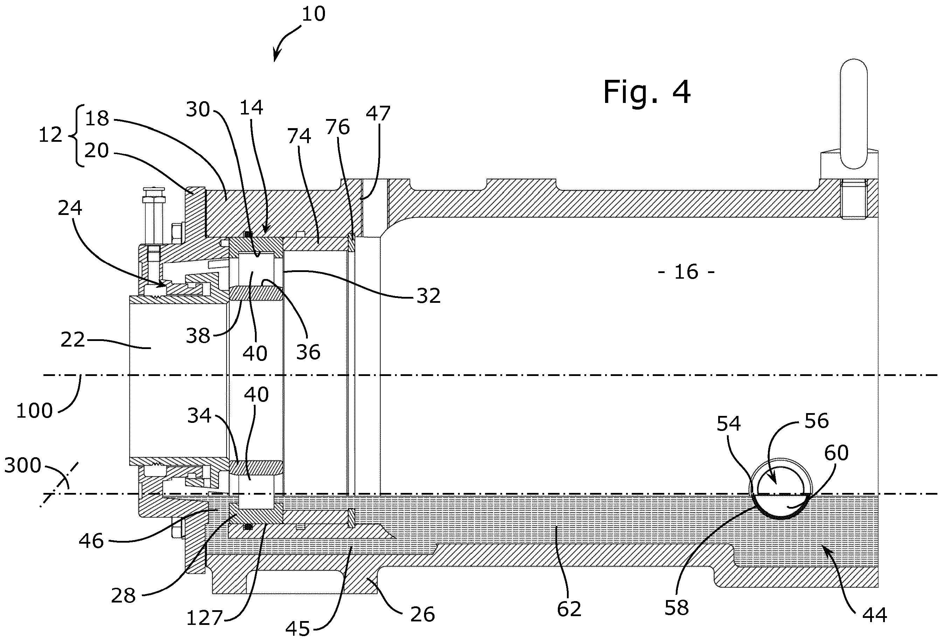

With reference to figures **4** to **5****,** an oil-lubricated rotary bearing assembly **10** comprises a stationary bearing housing **12** and a rotary bearing **14** received in a cavity **16** of the bearing housing **12.** The stationary bearing housing **12** comprises a main housing body **18** closed by a cover **20** provided with an opening **22** for accommodating a rotary shaft (not shown), as well as a labyrinth seal **24** filled with grease for isolating the cavity **16** from the outside around the rotary shaft. The bearing housing **12** is further provided with one or more pedestals **26** for fixing the bearing assembly **10** to a base. The bearing housing **12** can be made of steel or cast iron, but is preferably made of a light metal, e.g. aluminium, and forms a concave cylindrical seat **127.**

The rotary bearing **14** comprises at least one outer ring **28** press-fitted or otherwise fixed into the cylindrical seat **127** of the bearing housing **12.** The outer ring **28** is axially maintained in abutment against an inner wall of the cover **20** by means of a spacer ring **74** and a circlip **76.** The outer ring **28** is provided with at least one stationary outer race **30** which faces a revolution axis **100** of the bearing assembly **10.** In an operational position of the bearing housing **12,** the revolution axis **100,** which is coaxial with the axis of the cylindrical seat **127** and perpendicular to an end face **32** of the outer ring **28,** is also horizontal.

The rotary bearing **14** further comprises at least one inner ring **34** provided with at least one inner race **36** facing away from the revolution axis **100** and a tapered or cylindrical shaft seat **38** facing the revolution axis **100.** A set of rolling bodies **40** are disposed between the inner race(s) **36** and the outer race(s) **30** and retained by a bearing cage (not shown).

The cavity **16** of the bearing housing **12** includes an oil sump **44,** which, in the operational position, is located below the revolution axis **100.** A through bore **45** runs parallel to the revolution axis **100** below the rotary bearing **14** and the cylindrical seat **127,** to connect the lower part of the sump **44** to a lower chamber **46** of the cavity **16,** between the cover and the rotary bearing **14.**

The bearing housing **12** is provided with an oil inlet **47** for letting oil into the cavity **16** and an oil outlet **48** for letting oil out of the cavity **16** and of the bearing housing **12.**

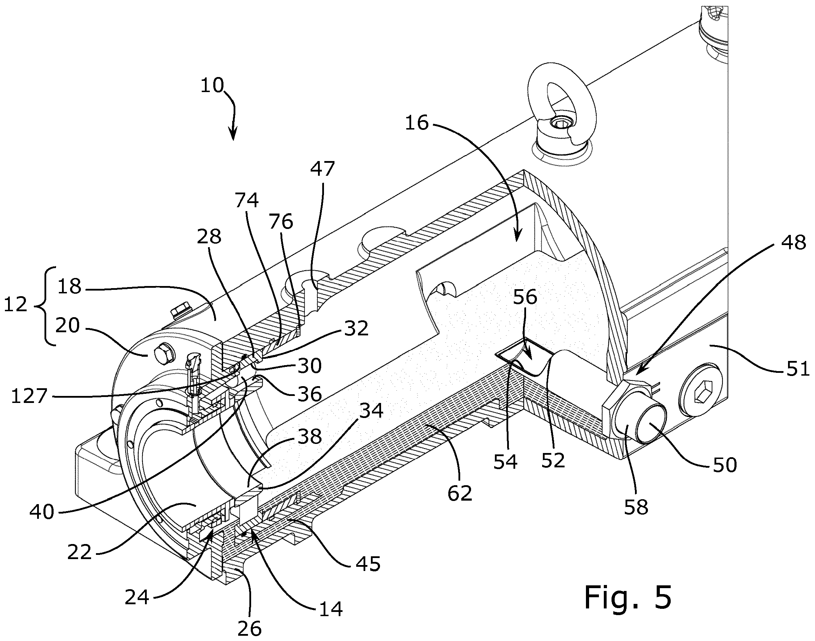

As best illustrated in figure **5****,** the oil outlet **48** is located at a distance of the bearing **14** in the axial direction.

The oil outlet **48** comprises a channel **50** through a side wall **51** of the bearing housing and a mouth section **52** having an edge **54** that surrounds an opening **56** located in the cavity **16** for communication between the cavity **16** of the bearing housing **12** and the channel **50.** In this embodiment, the oil outlet **48** consists of a tube **58** with an end wall **60** and a partial cutout to form the opening **56.** The tube extends in a horizontal direction **200,** which is perpendicular to a vertical plane containing the revolution axis **100.**

In the operational position, it is possible to define a horizontal reference plane **300,** which intersects the edge **54** of the opening **56** and such that each point of the edge of the opening is in or above the horizontal reference plane **300.** Remarkably, the reference plane **300,** which corresponds to the minimal level of an oil bath **62** in the cavity **16** of the bearing housing **12** and singularly in the sump **44,** is at a distance above the through bore **45** and closer to the revolution axis **100** than the outer ring **28.** As a result, the outer race **30** of the rotary bearing **14** is immersed into the oil bath **62.**

The edge **54** of the opening **56** has an uppermost part, which is at a lower vertical position than the cylindrical shaft seat **38,** preferably at a higher vertical position than a lowermost part of the inner race **36.** Accordingly, the full section of the opening **54** is available before the level of the oil in the cavity **16** of the bearing housing **12** reaches the cylindrical shaft seat **38.**

Preferably, the uppermost part of the edge **54** of the opening **56** is also at a lower vertical position than the seal **24,** which avoids an oil leakage through the seal **24.**

The channel **50** formed by the inner wall of the tube **58** defines a vertical cross-section through the side wall **51** of the bearing housing **12.** This cross-section extends on both sides of the horizontal reference plane **300.** In particular, the lowermost part of the cross section is below the horizontal reference plane while the uppermost part of the cross section is above the horizontal reference plane.

Remarkably, the opening **56** has an orthogonal projection on the horizontal reference plane **300** with a projected area, which is greater than or equal to an inner cross-sectional area of a lower part of the cross-section of the channel **50** that is below the horizontal reference plane **300,** and is preferably greater than or equal to an inner cross-sectional area of the cross-section of the channel **50.**

The oil-lubricated bearing assembly **10** further comprises an external oil-cooling circuit (not shown) similar to the oil-cooling circuit **64** of the first embodiment.

In operation, the rolling bodies **40** of the rotary bearing **14** run through the oil bath **62** at the lower end of the outer race **30.**

The invention is not limited to this embodiment. The rotary bearing can be a roller bearing a ball bearing or a plain bearing, with one race or more. The outer race can be integral with the housing, and/or the inner race can be integral on the shaft.

## Claims

1. Oil-lubricated bearing assembly (10) comprising a bearing housing (12), at least one rotary bearing (14, 14A, 14B, 14C) received in a cavity (16) of the bearing housing (12), the rotary bearing (14, 14A, 14B, 14C) having at least one stationary outer race (30) facing a revolution axis (100) of the bearing assembly (10), wherein in an operational position of the bearing housing (12) the revolution axis (100) is horizontal, wherein the bearing housing (12) comprises an oil outlet (48) for letting oil out of the bearing housing, wherein the oil outlet (48) comprises a channel (50) through a wall (51) of the bearing housing (12), and a mouth section (52) having an edge (54) that surrounds an opening (56) located in the bearing housing (12) for communication between the cavity (16) of the bearing housing (12) and the channel (50), wherein in the operational position, a horizontal reference plane intersects the edge (54) at at least one intersection point and is such that every point of the edge (54) is in or above the horizontal reference plane (300), and the horizontal plane (300) is at a distance above a lowermost part of the channel (50), wherein the reference plane (300) is at a distance above a lowermost part of the outer race (30) **characterised in that** the opening (56) has an orthogonal projection on the horizontal reference plane (300) with a projected area, which is strictly greater than an inner cross-sectional area of a lower part of a cross-section of the channel (50) that is below the horizontal reference plane (300).

2. The oil-lubricated bearing assembly (10) of claim 1, wherein the reference plane (300) is closer to the revolution axis (100) than the outer race (30).

3. The oil-lubricated bearing assembly (10) of any one of the preceding claims, wherein the rotary bearing (14, 14A, 14B, 14C) has at least one outer ring (28) on which the at least one stationary outer race (30) facing a revolution axis (100) of the bearing assembly (10) is formed.

4. The oil-lubricated bearing assembly (10) of claim 3, wherein the reference plane (300) is closer to the revolution axis (100) than the outer ring (28).

5. The oil-lubricated bearing assembly (10) of any one of the preceding claims, wherein the projected area of the orthogonal projection of the opening (56) on the horizontal reference plane (300) is greater than or equal to an inner cross-sectional area of the cross-section of the channel (50).

6. The oil-lubricated bearing assembly (10) of any one of the preceding claims, wherein the rotary bearing (14, 14A, 14B, 14C) has at least one inner ring (34) with at least one inner race (36) facing away from the revolution axis (100) and a cylindrical shaft seat (38) facing the revolution axis (100), and the edge (54) of the mouth section (52) has an uppermost part, which is at a lower vertical position than the cylindrical shaft seat (38), preferably at a higher vertical position than a lowermost part of the inner race (36).

7. The oil-lubricated bearing assembly (10) of any one of the preceding claims, wherein the channel (50) extends along a horizontal axis (200) preferably perpendicular to a vertical plane containing the revolution axis (100).

8. The oil-lubricated bearing assembly (10) of any one of the preceding claims, wherein the channel (50) has a cross-section, which extends on both sides of the horizontal reference plane (300).

9. The oil-lubricated bearing assembly (10) of any one of claims 1 to 8, wherein the oil outlet (48) comprises a tube (58) with a cut-out portion and an end wall (60) forming the edge (54) of the mouth section (52).

10. The oil-lubricated bearing assembly (10) of any one of claims 1 to 8, wherein the oil outlet (48) is a tube with a bent end forming the mouth section (52).

11. The oil-lubricated bearing assembly (10) of any one of the preceding claims, wherein the cavity (16) of the bearing housing (12) comprises an oil sump (44), which, when the bearing assembly (10) is in the operational position, is located below the revolution axis (100) and the opening (56) of the mouth section (52) of the outlet (48) is located in the oil sump (44).

12. The oil-lubricated bearing assembly (10) of any one of the preceding claims, further comprising an oil inlet (47) for letting oil into the bearing housing (12).

13. The oil-lubricated bearing assembly (10) of claim 12, further comprising an oil-cooling circuit (64) comprising at least one pump (66, 70) and oil pipes (72) for connecting the oil outlet (48) to the oil inlet (47) through the pump (66,70).

14. The oil-lubricated bearing assembly (10) of claim 13, wherein the oil-cooling circuit (64) further comprises a heat exchanger for extracting heat from oil circulating in the oil-cooling circuit (64).

## Patentansprüche

1. Ölgeschmierte Lageranordnung (10), umfassend ein Lagergehäuse (12), mindestens ein Drehlager (14, 14A, 14B, 14C), das in einem Hohlraum (16) des Lagergehäuses (12) aufgenommen ist, wobei das Drehlager (14, 14A, 14B, 14C) mindestens eine stationäre Außenlaufbahn (30) aufweist, die einer Drehachse (100) der Lageranordnung (10) zugewandt ist, wobei in einer Betriebsposition des Lagergehäuses (12) die Drehachse (100) horizontal ist, wobei das Lagergehäuse (12) einen Ölauslass (48) zum Auslassen von Öl aus dem Lagergehäuse umfasst, wobei der Ölauslass (48) einen Kanal (50) durch eine Wand (51) des Lagergehäuses (12) und einen Mündungsbereich (52) umfasst, der einen Rand (54) aufweist, der eine Öffnung (56) umgibt, die in dem Lagergehäuse (12) zur Kommunikation zwischen dem Hohlraum (16) des Lagergehäuses (12) und dem Kanal (50) angeordnet ist, wobei in der Betriebsposition eine horizontale Bezugsebene den Rand (54) an mindestens einem Schnittpunkt schneidet und so beschaffen ist, dass jeder Punkt des Randes (54) in oder über der horizontalen Bezugsebene (300) liegt, und die horizontale Ebene (300) in einem Abstand oberhalb eines untersten Teils des Kanals (50) liegt, wobei die Bezugsebene (300) in einem Abstand oberhalb eines untersten Teils der Außenlaufbahn (30) liegt, **dadurch gekennzeichnet, dass** die Öffnung (56) eine orthogonale Projektion auf die horizontale Bezugsebene (300) mit einer projizierten Fläche aufweist, die strikt größer als eine innere Querschnittsfläche eines unteren Teils eines Querschnitts des Kanals (50) ist, der unterhalb der horizontalen Bezugsebene (300) liegt.

2. Ölgeschmierte Lageranordnung (10) nach Anspruch 1, wobei die Bezugsebene (300) näher an der Drehachse (100) als die Außenlaufbahn (30) liegt.

3. Ölgeschmierte Lageranordnung (10) nach einem der vorhergehenden Ansprüche, wobei das Drehlager (14, 14A, 14B, 14C) mindestens einen Außenring (28) aufweist, auf dem die mindestens eine stationäre Außenlaufbahn, (30) ausgebildet ist, die einer Drehachse (100) der Lageranordnung (10) zugewandt ist.

4. Ölgeschmierte Lageranordnung (10) nach Anspruch 3, wobei die Bezugsebene (300) näher an der Drehachse (100) als der Außenring (28) liegt.

5. Ölgeschmierte Lageranordnung (10) nach einem der vorhergehenden Ansprüche, wobei die projizierte Fläche der Orthogonalprojektion der Öffnung (56) auf die horizontale Bezugsebene (300) wenigstens eine innere Querschnittsfläche des Querschnitts des Kanals (50) ist.

6. Ölgeschmierte Lageranordnung (10) nach einem der vorhergehenden Ansprüche, wobei das Drehlager (14, 14A, 14B, 14C) mindestens einen Innenring (34) mit mindestens einer Innenlaufbahn (36), die von der Drehachse (100) abgewandt ist, und einem zylindrischen Wellensitz (38), der der Drehachse (100) zugewandt ist, aufweist und wobei der Rand (54) des Mündungsbereichs (52) einen obersten Teil aufweist, der sich in einer niedrigeren vertikalen Position als der zylindrische Wellensitz (38) befindet, vorzugsweise in einer höheren vertikalen Position als ein unterster Teil der Innenlaufbahn (36).

7. Ölgeschmierte Lageranordnung (10) nach einem der vorstehenden Ansprüche, wobei sich der Kanal (50) entlang einer horizontalen Achse (200) erstreckt, die vorzugsweise senkrecht zu einer vertikalen Ebene verläuft, die die Drehachse (100) enthält.

8. Ölgeschmierte Lageranordnung (10) nach einem der vorhergehenden Ansprüche, wobei der Kanal (50) einen Querschnitt aufweist, der sich auf beiden Seiten der horizontalen Bezugsebene (300) erstreckt.

9. Ölgeschmierte Lageranordnung (10) nach einem der Ansprüche 1 bis 8, wobei der Ölauslass (48) ein Rohr (58) mit einem ausgeschnittenen Abschnitt und einer Stirnwand (60) umfasst, die den Rand (54) des Mündungsbereichs (52) bildet.

10. Ölgeschmierte Lageranordnung (10) nach einem der Ansprüche 1 bis 8, wobei der Ölauslass (48) ein Rohr mit einem gebogenen Ende ist, das den Mündungsbereich (52) bildet.

11. Ölgeschmierte Lageranordnung (10) nach einem der vorhergehenden Ansprüche, wobei der Hohlraum (16) des Lagergehäuses (12) eine Ölwanne (44) umfasst, die, wenn sich die Lageranordnung (10) in der Betriebsposition befindet, unterhalb der Drehachse (100) angeordnet ist und die Öffnung (56) des Mündungsabschnitts (52) des Auslasses (48) in der Ölwanne (44) angeordnet ist.

12. Ölgeschmierte Lageranordnung (10) nach einem der vorhergehenden Ansprüche, ferner umfassend einen Öleinlass (47) zum Einlassen von Öl in das Lagergehäuse (12).

13. Ölgeschmierte Lageranordnung (10) nach Anspruch 12, ferner umfassend einen Ölkühlkreislauf (64), umfassend mindestens eine Pumpe (66, 70) und Ölleitungen (72) zum Verbinden des Ölauslasses (48) mit dem Öleinlass (47) durch die Pumpe (66, 70).

14. Ölgeschmierte Lageranordnung (10) nach Anspruch 13, wobei der Ölkühlkreislauf (64) ferner einen Wärmetauscher zum Abziehen von Wärme aus dem in dem Ölkühlkreislauf (64) zirkulierenden Öl umfasst.

## Revendications

1. Ensemble de palier lubrifié à l'huile (10) comprenant un boîtier de palier (12), au moins un palier rotatif (14, 14A, 14B, 14C) reçu dans une cavité (16) du boîtier de palier (12), le palier rotatif (14, 14A, 14B, 14C) ayant au moins une piste extérieure fixe (30) faisant face à un axe de révolution (100) de l'ensemble de palier (10), dans lequel, dans une position opérationnelle du boîtier de palier (12), l'axe de révolution (100) est horizontal, dans lequel le boîtier de palier (12) comprend une sortie d'huile (48) pour laisser sortir de l'huile hors du boîtier de palier, dans lequel la sortie d'huile (48) comprend un canal (50) à travers une paroi (51) du boîtier de palier (12), et une section d'embouchure (52) ayant un bord (54) qui entoure une ouverture (56) située dans le boîtier de palier (12) pour la communication entre la cavité (16) du boîtier de palier (12) et le canal (50), dans lequel dans la position opérationnelle, un plan de référence horizontal coupe le bord (54) à au moins un point d'intersection et est tel que chaque point du bord (54) est dans le plan de référence horizontal (300) ou au-dessus, et le plan horizontal (300) est à une distance au-dessus d'une partie la plus basse du canal (50), le plan de référence (300) étant à une distance au-dessus d'une partie la plus basse de la piste extérieure (30), **caractérisé en ce que** l'ouverture (56) présente une projection orthogonale sur le plan de référence horizontal (300) avec une surface projetée, qui est strictement supérieure à une section transversale intérieure d'une partie inférieure d'une section transversale du canal (50) qui située sous le plan de référence horizontal (300).

2. Ensemble de palier lubrifié à l'huile (10) selon la revendication 1, dans lequel le plan de référence (300) est plus proche de l'axe de révolution (100) que la piste extérieure (30).

3. Ensemble de palier lubrifié à l'huile (10) selon l'une quelconque des revendications précédentes, dans lequel le palier rotatif (14, 14A, 14B, 14C) a au moins une bague extérieure (28) sur lequel l'au moins une piste extérieure fixe (30) faisant face à un axe de révolution (100) de l'ensemble de palier (10) est formée.

4. Ensemble de palier lubrifié à l'huile (10) selon la revendication 3, dans lequel le plan de référence (300) est plus proche de l'axe de révolution (100) que la bague extérieure (28).

5. Ensemble de palier lubrifié à l'huile (10) selon l'une quelconque des revendications précédentes, dans lequel la surface projetée de la projection orthogonale de l'ouverture (56) sur le plan de référence horizontal (300) est supérieure ou égale à une surface de section transversale intérieure de la section transversale du canal (50).

6. Ensemble de palier lubrifié à l'huile (10) selon l'une quelconque des revendications précédentes, dans lequel le palier rotatif (14, 14A, 14B, 14C) présente au moins une bague intérieure (34) avec au moins une piste intérieure (36) tournée à l'opposé de l'axe de révolution (100) et un siège d'arbre cylindrique (38) faisant face à l'axe de révolution (100), et le bord (54) de la section d'embouchure (52) présente une partie la plus haute, qui est à une position verticale inférieure au siège d'arbre cylindrique (38), de préférence à une position verticale supérieure à une partie la plus basse de la piste intérieure (36).

7. Ensemble de palier lubrifié à l'huile (10) selon l'une quelconque des revendications précédentes, dans lequel le canal (50) s'étend le long d'un axe horizontal (200) de préférence perpendiculaire à un plan vertical contenant l'axe de révolution (100).

8. Ensemble de palier lubrifié à l'huile (10) selon l'une quelconque des revendications précédentes, dans lequel le canal (50) présente une section transversale qui s'étend des deux côtés du plan de référence horizontal (300).

9. Ensemble de palier lubrifié à l'huile (10) selon l'une quelconque des revendications 1 à 8, dans lequel la sortie d'huile (48) comprend un tube (58) avec une partie découpée et une paroi d'extrémité (60) formant le bord (54) de la section d'embouchure (52).

10. Ensemble de palier lubrifié à l'huile (10) selon l'une quelconque des revendications 1 à 8, dans lequel la sortie d'huile (48) est un tube avec une extrémité courbée formant la section d'embouchure (52).

11. Ensemble de palier lubrifié à l'huile (10) selon l'une quelconque des revendications précédentes, dans lequel la cavité (16) du boîtier de palier (12) comprend un carter d'huile (44), qui, lorsque l'ensemble de palier (10) est dans le position opérationnelle, est situé sous l'axe de révolution (100), et l'ouverture (56) de la section d'embouchure (52) de la sortie (48) est située dans le carter d'huile (44).

12. Ensemble de palier lubrifié à l'huile (10) selon l'une quelconque des revendications précédentes, comprenant en outre une entrée d'huile (47) pour laisser de l'huile pénétrer dans le boîtier de palier (12).

13. Ensemble de palier lubrifié à l'huile (10) selon la revendication 12, comprenant en outre un circuit de refroidissement d'huile (64) comprenant au moins une pompe (66, 70) et des conduites d'huile (72) pour raccorder la sortie d'huile (48) à l'entrée d'huile (47) à travers la pompe (66, 70).

14. Ensemble de palier lubrifié à l'huile (10) selon la revendication 13, dans lequel le circuit de refroidissement d'huile (64) comprend en outre un échangeur de chaleur pour extraire de la chaleur de l'huile circulant dans le circuit de refroidissement d'huile (64).
